# FASCICULE DE BREVET EUROPEEN

(11) **EP 2 030 845 B1**
(45) Date de publication et mention de la délivrance du brevet: **10.10.2012**
(21) Numéro de dépôt: 08163088.1
(22) Date de dépôt: 27.08.2008
(51) Int. Cl.: B60R 13/04, B60R 13/01, B60J 5/04, B60J 5/10, B60J 10/00, B62D 25/12

(54) **Pièce d'habillage de véhicule automobile agencée au voisinage d'un ouvrant**
In der Nähe eines Flügels angebrachtes automobiles Verkleidungsteil
Automotive cladding installed in proximity to a wing

(30) Priorité: 30.08.2007 FR 0757277
(43) Date de publication de la demande: 04.03.2009
(73) Titulaire: Compagnie Plastic Omnium, 69007 Lyon (FR)
(72) Inventeur: André, Gérald, 01500 Amberieu en Bugey (FR); Chéron, Hugues, 01800 Meximieux (FR)
(74) Mandataire: Thiollier, Clémence-Olivia Laure Marie

(56) Documents cités:
- DE-A1- 10 026 559
- DE-A1- 10 348 444

## Description

La présente invention concerne le domaine des pièces d'habillage de véhicule automobile, également appelées pièces de décoration. De telles pièces, généralement en matière plastique, sont destinées à être visibles depuis l'habitacle intérieur ou depuis l'extérieur du véhicule.

On sait qu'un ouvrant de véhicule, tel qu'un hayon arrière, doit en principe obturer une ouverture du véhicule de manière étanche à l'eau, afin d'isoler l'habitacle intérieur. A cet effet, on dispose un joint entre l'ouvrant et un cadre d'appui de l'ouvrant, ce cadre, ménagé sur le véhicule, délimitant l'ouverture. Afin d'éviter l'infiltration d'eau entre l'ouvrant et le cadre, on prévoit généralement une gouttière, agencée autour du cadre, destinée à guider l'eau reçue par la carrosserie du véhicule pour l'évacuer, et éviter que cette eau stagne en face du joint. Ainsi, cette gouttière, agencée en retrait par rapport au cadre d'appui du joint, forme une gorge dirigeant hors du véhicule l'eau reçue, par un moyen de vidage de la gouttière, par exemple un orifice prévu sur une partie inférieure du cadre.

Un pièce d'habillage de véhicule automobile comportant les caractéristiques du préambule de la revendication 1 est connu du document DE 103 48 444 A1.

Une difficulté réside dans le fait que cette gouttière est visible par un observateur depuis l'extérieur du véhicule, au moins lorsque l'ouvrant est en position ouverte. Or, cette gouttière constitue une pièce "technique", pouvant donner à l'observateur une impression de complexité ou de saleté, alors que les constructeurs automobiles cherchent de plus en plus à donner une apparence aussi "propre" que possible au véhicule.

La présente invention vise à résoudre les inconvénients esthétiques posés par la présence de cette gouttière.

A cet effet, l'invention a pour objet une pièce d'habillage de véhicule automobile, le véhicule comportant un cadre d'appui d'un ouvrant et une gouttière agencée autour du cadre, la pièce d'habillage comportant des moyens de masquage de la gouttière. Selon l'invention les moyens de masquage de la gouttière comportent au moins un orifice de passage de l'eau. Ainsi, bien que ces moyens assurent le masquage de la gouttière, ils présentent des orifices suffisamment grands pour laisser passer de l'eau, afin qu'elle soit reçue puis évacuée par la gouttière. Les orifices sont néanmoins suffisamment petits pour que les moyens de masquage assurent une fonction esthétique, en dissimulant la gouttière. De préférence, les orifices sont ménagés sur une surface sensiblement horizontale sur le véhicule, notamment au voisinage du pavillon. Par ailleurs, des moyens de masquage ménagés sur une surface sensiblement verticale sont préférentiellement prévus sans orifices, car ils sont moins utiles dans cette position.

On comprendra que l'on entend par "gouttière agencée autour du cadre" une gouttière agencée au moins en partie autour de ce cadre, et par "moyens de masquage d'une gouttière" des moyens permettant de masquer au moins une partie de la gouttière. La gouttière comprend généralement une gorge, ou petit canal ouvert, ménagée sur le véhicule, en retrait par rapport à la surface du cadre sur laquelle le joint s'appuie.

Grâce à ces moyens de masquage, on dispose d'une gouttière permettant l'évacuation de l'eau, sans pour autant que cette gouttière soit visible par un observateur placé en face de l'ouverture du véhicule fermée par l'ouvrant, même lorsque l'ouvrant est en position ouverte. Ainsi, l'observateur ne reconnaît pas qu'une gouttière est agencée autour du cadre et n'a donc pas l'impression de voir une pièce technique autour du cadre. De préférence, l'observateur ne distingue pas la gouttière de son entourage immédiat lorsque l'ouvrant est ouvert. On peut prévoir par exemple comme moyens de masquage une surface recouvrant la gouttière, lisse ou présentant un relief de décoration, ce relief n'étant pas précisément le même que celui de la gouttière, ou encore dont l'apparence est différente de la gouttière, par exemple au moyen d'un matériau différent de celui de la gouttière, de façon à offrir à l'observateur une impression de confort, et non un aspect technique.

On notera en outre que, grâce aux moyens de masquage, l'observateur ne voit pas des salissures qui peuvent facilement s'incruster dans le creux de la gouttière ni des défauts tels que de la rouille. Par ailleurs, l'utilisateur de l'ouvrant n'est pas en contact avec le creux de la gouttière, et ne touche donc pas, en utilisant l'ouvrant, de l'eau ou des salissures stockées dans la gouttière.

Selon un mode de réalisation, la pièce d'habillage comporte des moyens de masquage, au moins en partie, du cadre d'appui, de préférence venus de matière avec les moyens de masquage de la gouttière. Généralement, ces moyens de masquage du cadre sont des moyens d'appui d'un joint assurant l'étanchéité de l'ouvrant, porté de préférence par l'ouvrant, ces moyens d'appui étant intercalés entre le cadre d'appui et le joint.

Grâce aux moyens de masquage du cadre d'appui, la pièce d'habillage peut masquer à la fois la gouttière et le cadre d'appui, recouvrant non seulement la gouttière mais également le cadre d'appui de l'ouvrant. On donne ainsi une impression de confort à l'observateur, en particulier dans le cas où la pièce a le même aspect qu'une pièce d'habillage intérieur, ou encore se prolonge vers l'intérieur du véhicule, ainsi qu'une impression de coffre spacieux.

L'aspect esthétique est d'autant meilleur lorsque les moyens de masquage de la gouttière et du cadre sont venus de matière, offrant ainsi une surface homogène, ne présentant pas de couture.

Par ailleurs, dans le cas où le cadre d'appui porte le joint, il comprend généralement une nervure d'appui et de fixation du joint, en saillie de la caisse, peu esthétique. Il est donc intéressant de pouvoir la masquer.

Enfin, même lorsque le joint est porté par le hayon, le cadre d'appui comprend généralement une nervure composée de l'une des parois latérales de la gouttière. Grâce aux moyens de masquage du cadre, on peut recouvrir cette nervure par une surface plus étendue que la surface de la nervure, si bien que la surface offerte à l'ouvrant, donc au joint, pour s'appuyer sur le cadre est plus large. Ainsi, on dispose sur le cadre d'une zone particulièrement étendue, de préférence plane et lisse, comme surface d'appui du joint porté par le hayon. Il en résulte que le cadre d'appui peut avoir une taille standard, éventuellement avec une nervure, tout en pouvant recevoir des ouvrants de taille différente, en particulier des ouvrants sur lesquels les joints sont disposés différemment ou présentent des dimensions différentes. De tels ouvrants diversifiés peuvent donc permettre de diversifier des modèles de véhicule tout en conservant le plus possible de pièces standard sur le véhicule, notamment des pièces structurelles standard. Enfin, cette surface d'appui plus large permet de gérer les tolérances de fabrication, aussi bien celles du cadre d'appui que celles de l'ouvrant ou du joint.

La pièce d'habillage peut en outre comporter l'une ou plusieurs des caractéristiques suivantes.
- La pièce d'habillage est configurée pour recouvrir sensiblement tout le contour de l'ouverture obturée par l'ouvrant, notamment plus de 80% de ce contour. On dispose ainsi d'un anneau, rapporté sur le cadre, homogène et sans couture, ce qui est particulièrement esthétique.
- Les moyens de masquage de la gouttière comportent au moins une nervure de rigidification, notamment une nervure apte à prendre appui sur le fond de la gouttière. Cette nervure est particulièrement intéressante dans le cas où le joint s'appuie, volontairement ou en raison des tolérances de fabrication, sur les moyens de masquage, car elle évite que les moyens de masquage s'enfoncent dans la gouttière sous la pression de l'appui. Elle évite également l'enfoncement sous la pression d'un utilisateur.
- La pièce d'habillage est réalisée en matière plastique, de préférence grainée, grâce à un traitement de surface tel que celui utilisé sur des pièces d'habillage pour l'intérieur du véhicule, par exemple en matière thermoplastique flexible, telle que du polypropylène non chargé. Ainsi, la pièce d'habillage a l'apparence d'une pièce intérieure, ce qui donne l'impression d'agrandir le coffre et augmente le confort.

L'invention a également pour objet une pièce d'habillage intérieur du véhicule, notamment une pièce d'habillage de pavillon et/ou une pièce d'habillage de montant de caisse et/ou une pièce d'habillage de jupe arrière comportant une pièce d'habillage telle que présentée ci-dessus, de préférence venue de matière. Ainsi, on peut prolonger des pièces d'habillage intérieur pour masquer la gouttière. En outre, ces pièces étant généralement en matière plastique, il est facile de les modifier pour intégrer les moyens de masquage de la gouttière et/ou du cadre d'appui.

L'invention a également pour objet l'ensemble d'une pièce d'habillage telle que décrite ci-dessus et d'un hayon arrière sur lequel est rapporté un joint principal d'obturation du hayon sur le véhicule, le joint étant destiné à être en appui sur la pièce d'habillage, de préférence en appui direct. Ainsi, le joint principal prend appui, directement ou par l'intermédiaire de la pièce d'habillage, sur le cadre d'appui.

Selon un mode de réalisation, ce hayon comporte un joint complémentaire, notamment sous forme de lame souple, disposé autour du joint principal, par exemple autour de la partie du hayon visible de l'extérieur, telle qu'un panneau extérieur du hayon de façon à former une lèvre périphérique de ce hayon. Ce joint complémentaire peut avoir une fonction aérodynamique, en évitant des vibrations du panneau extérieur du hayon. Ainsi, ce joint complémentaire obture le jeu caisse/hayon de manière complémentaire au joint principal, d'où des avantages acoustiques. Il peut également avoir une fonction d'étanchéité partielle à l'eau, visant à éviter que trop d'eau s'infiltre entre le panneau extérieur du hayon et le reste du véhicule, et ainsi épargner le joint principal, lequel pourrait en avoir besoin du fait que les moyens de masquage de la gouttière peuvent diminuer la capacité d'évacuation d'eau par la gouttière, ou dans le cas où les éventuels orifices de passage de l'eau prévus dans les moyens de masquage sont particulièrement petits. Enfin, ce joint complémentaire a une fonction esthétique, améliorant l'aspect extérieur du véhicule.

On notera qu'un tel hayon peut être utilisé sans être combiné à une pièce d'habillage telle que présentée ci-dessus. On dispose dans ce cas d'un hayon muni d'un joint principal porté par une partie intérieure du hayon, et d'un joint complémentaire, agencé autour du joint principal, porté de préférence par un panneau extérieur du hayon.

L'invention sera mieux comprise à la lecture de la description qui va suivre, donnée uniquement à titre d'exemple et faite en se référant aux dessins dans lesquels
- la figure 1 est une vue en perspective arrière d'une coupe d'un véhicule comportant une pièce d'habillage selon un mode de réalisation de l'invention;
- la figure 2 est une section selon le plan II de la figure 1, dans laquelle le hayon est fermé ; et
- la figure 3 est une section selon le plan III de la figure 1, dans laquelle le hayon est fermé.

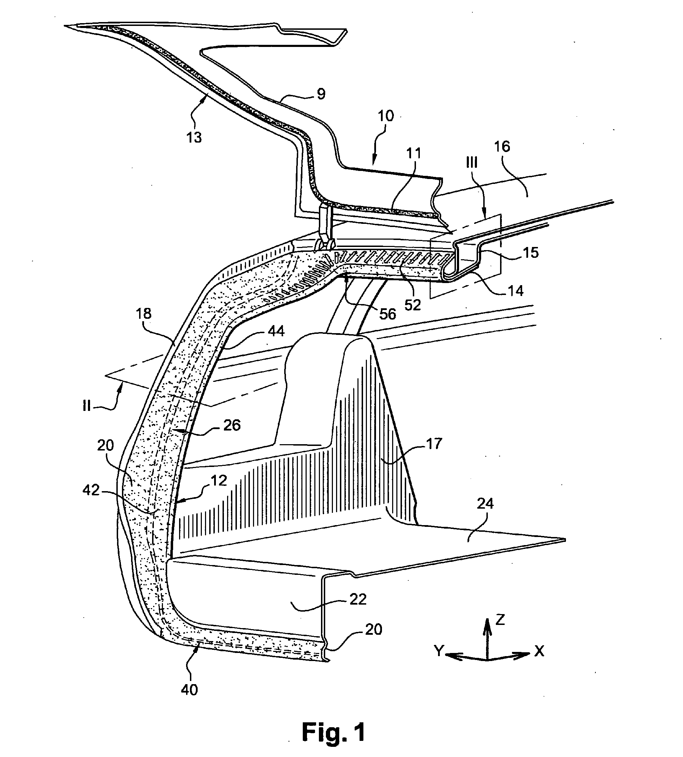

On a représenté sur la figure 1 un véhicule automobile comportant un ouvrant 10, plus précisément un hayon arrière monté pivotant sur le véhicule, destiné à obturer une ouverture du véhicule délimitée par un cadre d'appui 12, ménagé sur la caisse du véhicule. Dans l'exemple, le cadre d'appui 12 est un anneau arrière de caisse, délimité par des pièces structurelles appartenant à la caisse en blanc du véhicule, en particulier par l'extrémité 14 d'un pavillon (ou toit) 16, par l'extrémité d'un montant 18 de côté de caisse, et par l'extrémité d'une pièce structurelle inférieure. L'habitacle du véhicule est muni de pièces d'habillage intérieur, notamment une pièce d'habillage de toit, ou doublure de toit 15, une pièce 17 d'habillage latérale du coffre, et éventuellement une pièce d'habillage d'une jupe arrière 22, la jupe 22 étant rattachée à un plancher de coffre 24.

Le hayon 10 comporte un panneau extérieur 8, visible depuis l'extérieur du véhicule, et une doublure intérieure 9, assurant notamment la rigidité de ce hayon. Le hayon 10 est par ailleurs muni d'un joint principal d'étanchéité 11, tubulaire, ainsi que d'un joint complémentaire 13, sous forme de lame souple, de façon à former une lèvre extérieure. Le joint 11 est rapporté sur la doublure intérieure 9 et le joint 13 est rapporté à la périphérie du panneau extérieur 8.

Le cadre d'appui 12 délimite l'ouverture obturée par le hayon 10, et correspond en particulier au cadre reprenant les efforts du hayon au cours de sa fermeture, cadre sur lequel est appuyé, directement ou indirectement, le joint 11.

L'arrière du véhicule comprend en outre une gouttière 26, agencée autour du cadre d'appui 12. Cette gouttière forme une gorge, ou petit canal ouvert, agencée sur la caisse en retrait par rapport au cadre d'appui 12 et destinée à recevoir de l'eau afin de l'évacuer, notamment de l'eau de pluie. La gouttière 26 est délimitée par un fond 28, et deux parois latérales 30, 32, la paroi 30 étant confondue avec une nervure 34 du cadre d'appui 12. Cette nervure 34 présente une surface 36, destinée à permettre l'étanchéité de la liaison du cadre 12 et du hayon 10, en coopérant avec le joint 11.

Le véhicule comporte par ailleurs une pièce d'habillage 40, rapportée sur le cadre 12, visible depuis l'extérieur du véhicule lorsque le hayon 10 est ouvert, réalisée en matière plastique grainée. Cette pièce d'habillage 40 comporte des moyens 42 de masquage de la gouttière 26, ces moyens 42 comprenant une surface recouvrant la gouttière, ainsi que des moyens 44 de masquage du cadre d'appui 12, comprenant une surface recouvrant le cadre d'appui 12, prolongeant la surface 42, venus de matière avec cette surface 42.

Comme on peut le voir sur les figures, la pièce d'habillage 40 permet de dissimuler la gouttière 26 et le cadre d'appui 12 et donne une impression de confort.

Dans le mode de réalisation décrit sur les figures, la pièce d'habillage 40 recouvre tout le contour de l'ouverture obturée par le hayon, donc tout le cadre 12. en outre, elle recouvre toute la gouttière 26. Néanmoins, cette pièce 40 pourrait ne recouvrir qu'une partie du cadre 12 et/ou qu'une partie de la gouttière 26.

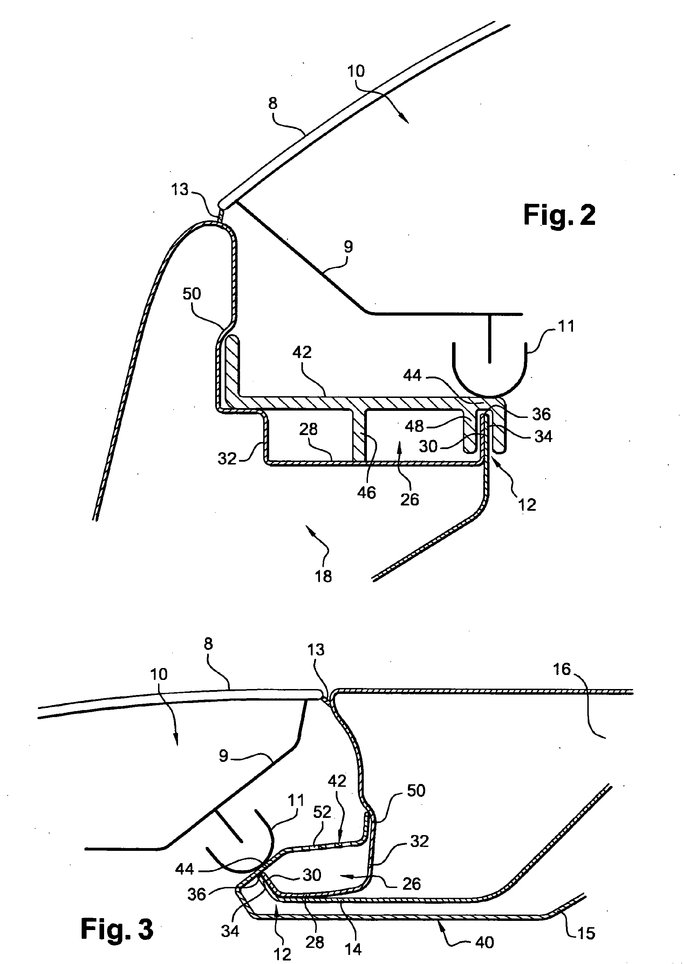

Comme on peut le voir sur la figure 2, les moyens 42 de masquage de la gouttière comportent une nervure 46 de rigidification des moyens de masquage, cette nervure 46 prenant appui sur le fond 28 de la gouttière 26. Par ailleurs, les moyens 44 de masquage du cadre d'appui 12 comportent des moyens 48 d'emboîtement avec le cadre 12, plus précisément une fente 48 dans laquelle est insérée la nervure 34, assurant le positionnement de la pièce d'habillage 40 sur le cadre 12.

Le véhicule comporte des moyens 50 de réception de la pièce d'habillage 40. Ces moyens 50 comprennent dans l'exemple un évidement ménagé dans la caisse du véhicule, en l'occurrence dans le montant 18 et le pavillon 16.

Comme on peut le voir sur les figures 1 et 3, les moyens 42 de masquage de la gouttière 26 comportent des orifices 52 ménagés sur la partie supérieure horizontale de la pièce d'habillage 40, permettant de laisser passer de l'eau à travers la pièce d'habillage. Ces orifices 52 ont la forme de fentes. Ils sont suffisamment grands pour laisser passer de l'eau, et suffisamment petits pour assurer une fonction de décoration, en particulier une fonction de masquage de la gouttière 26 pour un observateur situé près du véhicule. Les fentes 52 peuvent avoir une largeur inférieure à 10 mm. Ils forment une grille. On notera que les moyens 42 de masquage de la gouttière ménagés sur une surface sensiblement verticale sur le véhicule, notamment au voisinage des montants latéraux 18 visibles sur la figure 2, sont prévus sans orifices, du fait que les orifices sont moins utiles à cet endroit pour recueillir de l'eau.

Ainsi, les orifices sont ménagés sur des zones de la pièce 40 recouvrant des parties de la gouttière 26 particulièrement exposées pour recevoir de l'eau, en l'occurrence une zone 56 supérieure, sensiblement horizontale de la pièce 40, ménagée au voisinage du pavillon 16.

Comme on peut le voir sur la figure 1, la pièce d'habillage 40 est avantageusement réalisée d'un seul tenant avec d'autres pièces d'habillage, telles que la doublure de toit 15 ou éventuellement l'habillage latéral 17, ou encore une pièce d'habillage de la jupe 22.

L'invention n'est pas limitée aux modes de réalisation précédemment décrits.

En particulier, la pièce d'habillage 40 de la figure 1 recouvre tout le contour du cadre d'appui, et est réalisée en une seule pièce par moulage. De façon alternative, cette pièce peut être réalisée en plusieurs parties, séparées ou non, venues de matière ou non avec d'autres pièces d'habillage intérieures telles que les pièces 22, 24, 17, 15, et peut ne pas recouvrir tout le contour du cadre d'appui 12.

On notera par ailleurs que le hayon 10 peut être utilisé sans la présence d'une pièce d'habillage telle que la pièce 40. Ce hayon 10 est particulièrement intéressant du fait que le joint complémentaire 13 diminue la quantité d'eau destinée à entrer en contact avec le joint principal 11, si bien que ce joint peut comporter moins d'exigences techniques qu'un joint classique. En outre, le joint complémentaire 13 diminue la quantité d'eau destinée à être reçue par la gouttière 26, si bien que la gouttière peut être éventuellement recouverte par des moyens de masquage sans pour autant que l'étanchéité de l'habitable intérieur soit moins efficace. En outre, la présence du joint complémentaire 13 apporte d'autres avantages présentés plus haut, notamment des avantages aérodynamiques par la diminution des vibrations du panneau extérieur 9 du hayon, ce qui est particulièrement intéressant sur des véhicules longs tels que les véhicules de sept places.

## Revendications

1. Pièce d'habillage (40) de véhicule automobile étant configurée pour être rapportée sur un véhicule automobile, le véhicule automobile comportant un cadre d'appui (12) d'un ouvrant (10) et une gouttière (26) agencée autour du cadre (12), la pièce d'habillage (40) comportant des moyens (42) de masquage de la gouttière (26), caractérisée en ce les moyens de masquage (42) comportent au moins un orifice (52) de passage d'eau.

2. Pièce selon la revendication 1, comportant des moyens (44) de masquage du cadre d'appui (12), de préférence venus de matière avec les moyens (42) de masquage de la gouttière (26).

3. Pièce selon les revendications précédentes, configurée pour recouvrir sensiblement tout le contour d'une ouverture obturée par l'ouvrant (10), notamment plus de 80 % de ce contour.

4. Pièce selon l'une quelconque des revendications précédentes, dans laquelle les moyens (42) de masquage de la gouttière (26) comportent au moins une nervure de rigidification (46).

5. Pièce selon l'une quelconque des revendications précédentes, réalisée en matière plastique, de préférence grainée.

6. Pièce d'habillage intérieur de véhicule automobile, comportant une pièce d'habillage selon l'une quelconque des revendications 1 à 5, de préférence venue de matière avec la pièce d'habillage intérieur.

7. Pièce d'habillage intérieur selon la revendication 6, appartenant au groupe comprenant une pièce d'habillage (17) de montant de caisse (18), une pièce d'habillage de jupe arrière (22) et une pièce (15) d'habillage de pavillon (16).

8. Ensemble d'une pièce d'habillage selon l'une quelconque des revendications 1 à 7. et d'un hayon arrière (10) sur lequel est rapporté un joint principal (11) d'obturation du hayon sur le véhicule.

9. Ensemble selon la revendication 8, dans lequel le hayon comporte un joint complémentaire (13) disposé autour du joint principal (11).

## Claims

1. Trim part (40) for motor vehicle configured for attachment to a motor vehicle, the motor vehicle comprising a support frame (12) of an opening (10) and a gutter (26) arranged around the frame (12), the trim part (40) comprising means (42) for masking the gutter (26), **characterised in that** the masking means (42) comprise at least one hole (52) for water to pass through.

2. Part according to claim 1, comprising means (44) for masking the support frame (12), preferably made in one piece with the means (42) for masking the gutter (26).

3. Part according to the preceding claims, configured to substantially cover the entire contour of an opening blocked by the opening panel (10), in particular more than 80 % of this contour.

4. Part according to any of the preceding claims, wherein the means (42) for masking the gutter (26) comprise at least one stiffening rib (46).

5. Part according to any of the preceding claims, made from plastic material, preferably grained.

6. Automotive interior trim part, comprising a trim part according to any of claims 1 to 5 preferably made in one piece with the interior trim part.

7. Interior trim part according to claim 6, belonging to the group comprising a body pillar (18) trim part (17), a rear skirt (22) trim part and a roof (16) trim part (15).

8. Assembly of a trim part according to any of claims 1 to 7 and a rear tailgate (10) fitted with a main seal (11) to seal the tailgate on the vehicle.

9. Assembly according to claim 8, wherein the tailgate comprises an extra seal (13) fitted around the main seal (11).

## Patentansprüche

1. Verkleidungsteil (40) für Kraftfahrzeug, das konfiguriert ist, um an einem Kraftfahrzeug angebaut zu werden, wobei das Kraftfahrzeug einen Anlagerahmen (12) einer Tür (10) und eine Wasserrinne (26), die um den Rahmen (12) angeordnet ist, aufweist, wobei das Verkleidungsteil (40) Mittel (42) zum Abdecken der Wasserrinne (26) aufweist, **dadurch gekennzeichnet, dass** die Abdeckmittel (42) mindestens eine Öffnung (52) zum Durchgehen von Wasser aufweisen.

2. Teil nach Anspruch 1, das Mittel (44) zum Abdecken des Anlagerahmens (12) aufweist, die vorzugsweise aus einem Stück mit den Mitteln (42) zum Abdecken der Wasserrinne (26) hergestellt sind.

3. Teil nach den vorhergehenden Ansprüchen, das konfiguriert ist, um im Wesentlichen die ganze Kontur einer Öffnung abzudecken, die von der Tür (10) verschlossen wird, insbesondere mehr als 80 % dieser Kontur.

4. Teil nach einem der vorhergehenden Ansprüche, bei dem die Mittel (42) zum Abdecken der Wasserrinne (26) mindestens eine Versteifungsrippe (46) aufweisen.

5. Teil nach einem der vorhergehenden Ansprüche, das aus Kunststoff, der vorzugsweise körnig ist, hergestellt ist.

6. Innenverkleidungsteil für Kraftfahrzeug, das ein Verkleidungsteil nach einem der Ansprüche 1 bis 5 aufweist, das vorzugsweise mit dem Innenverkleidungsteil aus einem Stück hergestellt ist.

7. Innenverkleidungsteil nach Anspruch 6, das zu der Gruppe gehört, die ein Verkleidungsteil (17) für Fahrzeugaufbauständer (18), ein Verkleidungsteil der hinteren Schürze (22) und ein Teil (15) zum Verkleiden des Himmels (16) aufweist.

8. Baugruppe aus einem Verkleidungsteil nach einem der Ansprüche 1 bis 7 und einer Heckklappe (10), an die eine Hauptdichtung (11) zum Verschließen der Heckklappe an dem Fahrzeug angebaut ist.

9. Baugruppe nach Anspruch 8, bei der die Heckklappe eine komplementäre Dichtung (13), die um die Hauptdichtung (11) angeordnet ist, aufweist.
